# NOUVEAU FASCICULE DE BREVET EUROPEEN

(11) **EP 0 524 886 B2**
(45) Date de publication et mention de la décision concernant l'opposition: **08.06.2005**
(45) Mention de la délivrance du brevet: 29.01.1997
(21) Numéro de dépôt: 92402140.5
(22) Date de dépôt: 23.07.1992
(51) Int. Cl.: C04B 7/60, C04B 7/43

(54) **Procédé de production de clinker de ciment avec récupération améliorée des poussières**
Verfahren zur Herstellung von Zement-Klinker mit verbesserter Staubrückgewinnung
Process for producing cement with improved dust recovery

(30) Priorité: 26.07.1991 FR 9109531
(43) Date de publication de la demande: 27.01.1993
(73) Titulaire: Technip France, 92973 Paris la Défense Cedex (FR)
(72) Inventeur: Makris, Michel, F-78800 Houilles (FR)
(74) Mandataire: Blot, Philippe Robert Emile

(56) Documents cités:
- DE-A- 3 905 453
- DE-A- 3 905 454
- FR-A- 2 235 890
- GB-A- 1 145 827

## Description

L'invention est relative à la production de clinker de ciment. Elle concerne plus particulièrement un procédé permettant d'obtenir un clinker de bonne qualité avec un appareillage réduit et une pollution réduite de l'environnement.

La fabrication de clinker est un procédé bien connu et largement appliqué à l'échelle industrielle. Pour un état général de l'art en ce domaine on peut se référer par exemple à l'encyclopédie Ullmann, édition anglaise, Vol. A5, pages 489-537, en particulier pages 493-502 pour la fabrication du clinker et pages 514-515 pour les problèmes de récupération des poussières. Dans ce document on trouve notamment des informations sur les étapes de préchauffage, d'éventuelle précalcination, de clinkérisation (calcination) et de refroidissement du clinker.

Un des problèmes qui se sont posés ces dernières années est celui de l'accumulation de certaines impuretés, notamment celles de composés chlorés. La présence de chlore peut avoir plusieurs origines, notamment le combustible (par exemple lorsqu'on brûle des déchets urbains), ou les matières premières du ciment.

On admet généralement que lorsque la teneur en chlore des matières premières de fabrication du clinker dépasse une valeur de 0,01 à 0,02%, en particulier 0,015% en poids, il est indispensable d'évacuer une partie des gaz de combustion (purge) à la sortie du four de précalcination, pour ne laisser passer dans les échangeurs de chaleur, au contact des matières premières fraîches, qu'une partie de ces gaz, celle qui n'a pas été évacuée par la purge. On évite ainsi l'accumulation de chlorures et autres impuretés dans le gaz qui traverse les échangeurs et les dépôts solides résultant qui pourraient obstruer ces échangeurs ou tout au moins en réduire l'efficacité. Ce phénomène et des moyens pour y remédier (purge) ont été notamment décrits dans le Zemen-Kalk-Gips No. 3/1990, pages 59-62 (traduction en anglais du même périodique No. 1/90 pages 20-25).

D'autres études ont été publiées, notamment dans Zemen-Kalk-Gips, par exemple No. 8/1985, pages 411-415, No. 11/1988, pages 540-543.

La technique utilisée quelle que soit l'origine du chlore, consiste habituellement à prélever environ 1 à 5% en volume du gaz de combustion, à la sortie du four de clinkérisation, pour constituer le courant de purge. On dilue ce courant qui est à température élevée, environ 900-1100°C, par de l'air froid pour amener sa température au-dessous de 600°C, par exemple au-dessous de 450°C, ce qui provoque la cristallisation des impuretés, notamment des chlorures sous forme de poussières de faible densité, hygroscopiques, d'aspect analogue à celui de la neige ; on sépare cette poussière du gaz au moyen de dispositifs de séparation et on la transporte vers le stockage en vue d'utilisations diverses ou même de son épandage.

Les moyens proposés jusqu'à présent pour traiter le courant de purge se sont révélés insatisfaisants, en particulier en raison de la nature et de la consistance de la poussière.

Par exemple l'emploi de filtres à manche, particulièrement efficaces pour satisfaire les normes anti-pollution, est difficilement réalisable en raison de la nature hygroscopique de la poussière qui colle aux manches, notamment lors des arrêts pour nettoyage ou autres raisons, et peut même détruire les filtres.

On peut donc utiliser en pratique que des électrofiltres. L'emploi de cyclones est peu efficace et ne permet pas une séparation suffisante des poussières. De plus, les poussières les plus riches en polluants sont aussi les plus fines, et elles ne sont pas retenues par les cyclones. Donc si on renvoie le gaz seulement débarrassé des particules les plus grossières dans ledit échangeur, on y ramène une proportion importante de polluants. Il faut alors surdimensionner l'installation et accroître le volume de purge pour maintenir un taux d'élimination des chlorures acceptables, ce qui augmente encore la quantité de poussières à éliminer et la consommation énergétique de l'installation.

Même si l'on parvient à filtrer les poussières de chlorure et autres impuretés de la purge, on rencontre un problème supplémentaire, celui du transport et du stockage des poussières. Celles-ci, très légères, échappent en quantité notable aux appareils de transport en raison de leur consistance neigeuse, elles se stockent difficilement, nécessitant des volumes de stockage importants et leur nature fortement hygroscopique conduit à des blocages d'appareils ou bouchages de canalisation.

Il existe donc un problème à résoudre, celui de pouvoir disposer d'un procédé de traitement du courant de purge remédiant aux inconvénients ci-dessus. Il serait souhaitable notamment de pouvoir filtrer et manipuler plus aisément les poussières du courant de purge. Enfin, il serait souhaitable de trouver une utilisation pour ces poussières.

Les problèmes sont résolus par le procédé de l'invention, basé sur l'observation surprenante selon laquelle la filtration du courant de purge contenant des poussières est grandement facilitée quand ce courant est additionné de poussières de clinker et plus particulièrement de poussières entraînées lors du refroidissement (trempe) du clinker à la sortie du four de clinkérisation.

Le procédé de l'invention est un procédé dans lequel on fait passer une charge particulaire de matières premières pour ciment successivement à travers au moins une zone de préchauffage, au moins une zone de clinkérisation où la charge se transforme en clinker et au moins une zone de refroidissement dudit clinker, on brùle un combustible avec un gaz contenant de l'oxygene libre dans la zone de clinkérisation, ladite charge particulaire et/ou ledit combustible contenant du chlore, on fait circuler les fumées chaudes résultant de la combustion à contre-courant de la charge particulaire d'abord dans la zone de clinkérisation puis dans la zone de préchauffage, on envoie de l'air froid dans le zone de refroidissement au contact du clinker à refroidir, on envoie au moins une partie de l'air chaud provenant dudit contact dans une zone de dépoussiérage pour récupérer la poussière de clinker entraînée et on décharge l'air dépoussiéré résultant, on soutire une portion des fumées de la zone de clinkération avec les impuretés qu'elles contiennent pour constituer un courant de purge, on soumet ladite portion des fumées chaudes (purge) à un refroidissement et à un dépoussiérage et on décharge les fumées dépoussiérées.

Selon l'invention, le procédé est caractérisé, à titre principal, en ce qu'on effectue ledit refroidissement dudit courant de purge par son mélange avec de l'air foid, en ce qu'on mélange de la poussière de clinker à au moins une partie dudit courant de purge après ledit refroidissement et avant ledit dépoussièrage, et en ce que la teneur en poussière de clinker du courant résultant du mélange du courant de purge et des poussières de clinker est de 60% à 99,5% en poids de la teneur totale en poussière dudit mélange, le complément étant de la poussière de courant de purge.

Dans un mode de réalisation particulier, la teneur en poussière de clinker est par exemple de 80% à 95% en poids.

Plusieurs modes de réalisation peuvent être envisagés. On peut par exemple mélanger au courant de purge, contenant de la poussière d'impuretés, en particulier d'impuretés chlorées provenant du four de clinkérisation, de la poussière de clinker telle que, par exemple celle obtenue dans un filtre. On préfère cependant mélanger au moins une partie du courant de purge, contenant de la poussière d'impuretés, à au moins une partie du courant gazeux provenant du refroidissement du clinker et contenant de la poussière de clinker.

On peut filtrer séparément le courant de purge, après addition de poussière de clinker, ou de préférence mélanger le courant de purge à l'effluent gazeux de la zone de refroidissement à l'air du clinker contenant de la poussière de clinker.

Un des avantages du présent procédé est d'obtenir une filtration aisée, pouvant utiliser par exemple les filtres à manche ou tout autre type de filtre de haute efficacité.

Un autre avantage est obtenu : il est possible de refroidir le courant de purge additionné de poussières de clinker dans les ecnangeurs ciassiques, notamment des échangeurs air/air, ce qui est pratiquement impossible avec ie courant de purge seul en raison des dépôts et bouchages. La présence de poussières de clinker évite ou réduit les dépôts.

Selon une forme de réalisation préférée, au moins une portion des particules de poussière collectées lors du dépoussiérage du courant de purge additionné de poussière de clinker, sont mélangées ensuite au clinker, avant ou après broyage de celui-ci ; ceci en une proportion compatible avec les normes à respecter pour le ciment.

On obtient ainsi un clinker avantageusement modifié en cela que les poussières qui sont riches en chlorures et sulfates alcalins améliorent la réactivité des ciments obtenus ultérieurement par broyage de ce clinker. Ainsi, à finesse de broyage égale, le ciment fabriqué permettra d'obtenir sur mortier des résistances plus élevées à un jour et trois jours.

Dans une autre forme de réalisation, l'installation comporte une zone de précalcination de type connu, interposée entre la zone de préchauffage et la zone de clinkérisation. Dans ce cas, on préfère prélever le courant gazeux de "purge" entre la zone de précalcination et la zone de clinkérisation (calcination).

Le courant gazeux de purge représente une proportion mineure du courant de gaz issu de la zone de clinkérisation, par exemple 0,5 à 10% de préférence 1 à 5% en volume de ce dernier courant. Il est connu de mélanger ce courant de purge à un courant d'air froid qui a pour effet de le refroidir et d'en faciliter le dépoussiérage ultérieur.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :
La figure 1 représente un schéma de procédé selon un exemple de réalisation.
La figure 2 est un schéma de procédé partiel d'un mode de réalisation du prélèvement du flux de purge.

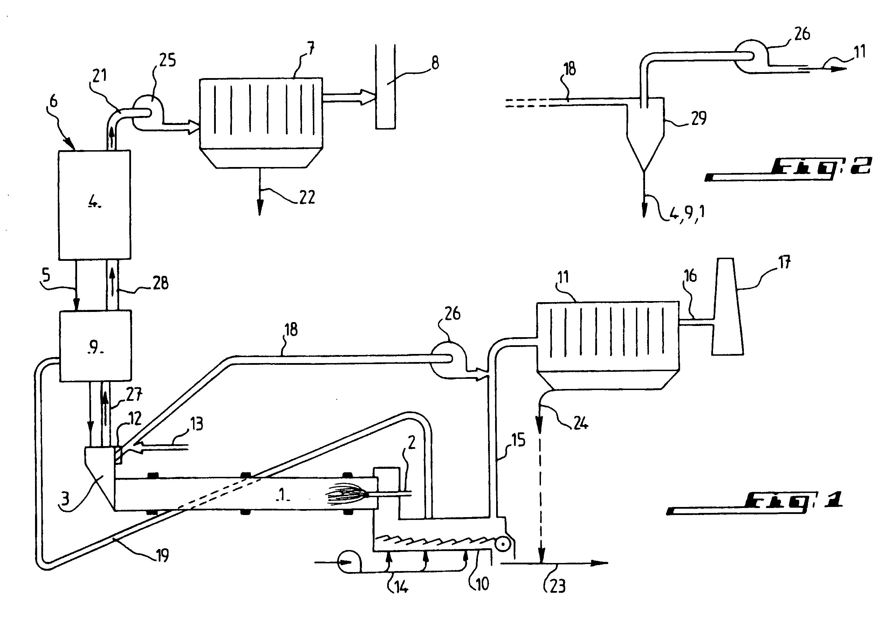

L'installation visible sur la figure 1 comprend un four principal de clinkérisation 1, comportant un brûleur 2, une zone de préchauffage 4, une conduite d'alimentation 6 pour la matière première, un premier dépoussiéreur 7 alimentant, si on le désire, la cheminée 8, un four facultatif de précalcination 9, une zone de refroidissement ou de trempe du clinker 10 et un second dépoussiéreur 11. On n'a pas représenté les autres échangeurs qui sont de type connu et permettent d'amener les courants de différentes matières, à la température normale et connue de fonctionnement de chaque appareil.

Selon l'invention, une partie du gaz effluent de la zone de clinkérisation est déchargée par la conduite 12 et trempée par un courant d'air froid 13. Le mélange gazeux résultant à une température inférieure à 450°C est aspiré dans la ligne 18 par le ventilateur 26 et rejoint à l'entrée du dépoussiéreur 11 la fraction 15 du courant d'air 14 qui a servi à refroidir le clinker dans la zone 10 et qui n'a pas été valorisé comme air de combustion au four, ou au précalcinateur ou comme air de séchage. Le gaz dépoussiéré est évacué par la ligne 16 soit pour une utilisation ultérieure soit pour décharge par la cheminée 17, et les poussières sont évacuées par la ligne 24.

Les matières crues dosées pour la fabrication de ciment entrent dans l'installation par l'alimentation 6 ; elles sont préchauffées dans l'échangeur 4 par les fumées du four 1 et du précalcinateur 9 ; les matières préchauffées sont précalcinées par le précalcinateur 9 et sont envoyées au four 1 à travers la boîte à fumées 3. Les gaz sortant du four 1 et contenant des poussières chargées en chlorures et sulfates alcalins et des vapeurs condensables sont récupérés dans la boîte à fumées 3 où une mineure partie est envoyée à la ligne 12 de purge et une majeure partie est envoyée vers le précalcinateur 9 par le conduit 27 puis vers l'échangeur 4 par le conduit 28. L'ensemble des fumées refroidies quitte le préchauffeur par le conduit 21 et sont envoyées par le ventilateur 25 dans le filtre 7. Les fumées dépoussiérées sont envoyées à la cheminée 8 et les poussières sont évacuées par la ligne 22.

A la sortie du four 1, le clinker à haute température traverse la zone de trempe 10, alimentée en air par la ligne 14. Il est ensuite déchargé par la ligne 23. De façon avantageuse, il reçoit les poussières du dépoussiéreur 11 par la ligne 24. Dans un mode de réalisation préféré (figure 2), on effectue d'abord un dépoussiérage partiel du courant de purge 18, dans un cyclone 29 par exemple, on renvoie au préchauffeur 4, au précalcinateur 9 ou au four 1, les poussières grossières (par exemple 20 à 80% en poids du total des poussières de la purge) et on n'envoie (soufflante 26) au dépoussiéreur 11 que le courant de gaz entraînant les poussières les plus fines (par exemple 80 à 20% en poids du total des poussières de la purge) qui présentent habituellement la teneur en chlore la plus élevée. Dans ce cas l'ajout de particules de clinker se fait sur ce dernier courant.

A titre d'exemple détaillé sur une ligne de cuisson de clinker comportant un préchauffeur à cinq étages de cyclone, la matière crue alimentée a la composition suivante :

| COMPOSANT | TENEUR (%) |
|---|---|
| Si O₂ | 13,9 |
| Al₂ 0₃ | 2,7 |
| Fe₂ 0₃ | 1,85 |
| Ca 0 | 42,9 |
| K₂ 0 | 0,75 |
| Perte au feu | 35,6 |
| S | 0,63 |
| Cl | 0,022 |
| Complément | 1,6 |

Le combustible utilisé pour la cuisson apporte des éléments nocifs complémentaires suivants :

| COMPOSANTS NOCIFS | APPORT g/kg CLINKER |
|---|---|
| K₂ O | 0,9 |
| SO₃ | 3,5 |
| Cl | 0,08 |

Le clinker a la composition suivante

| COMPOSANT | TENEUR (%) |
|---|---|
| Si 0₂ | 21,8 |
| Al₂ 0₃ | 4,4 |
| Fe₂ O₃ | 3,0 |
| Ca 0 | 65,6 |
| K₂ 0 | 1,20 |
| SO₃ | 0,96 |
| Cl | 0,012 |
| Complément | 3,0 |

L'unité est équipée d'une purge où l'on extrait 8 kg par tonne de clinker de poussières dont la composition est la suivante.

| COMPOSANT | TENEUR (%) |
|---|---|
| Si O₂ | 15,9 |
| Al₂ 0₃ | 3,1 |
| Fe₂ 0₃ | 2,1 |
| Ca 0 | 49,2 |
| K₂ 0 | 4,3 |
| SO₃ | 3,5 |
| Cl | 3,9 |
| Perte au feu | 17,8 |
| Complément | 0,2 |

A l'état brut ces poussières ont une densité inférieure à 0,4 kg/m³ et ne sont pas manipulables par un sas rotatif par suite de phénomènes de voutage. En application du procédé selon l'invention, une partie du flux de purge prélevée à 380°C dans le flux principal est trempée à 250°C par addition d'air chargé en poussière de clinker.

Après refroidissement dans un échangeur air/air les fumées résultantes sont filtrées (à 120°C) dans un filtre à manche de petite dimension (600 m³/h).

La poussière de purge mélangée à la poussière de clinker récupérée a une densité de 0,90 et est facilement manipulée dans un sas rotatif.

Par ailleurs la purge du filtre à manche ne pose pas de problème particulier malgré sa taille réduite. Le taux de dilution des poussières de purge par les poussières de clinker est de 7 (teneur en chlore des poussières mélangées : 0,56%).

Après broyage à 3500 cm²/g d'un mélange à 95% clinker - 5% gypse (échantillon de référence) et d'un mélange 90% clinker - 5,5% poussière mélangée (clinker + purge) - 4,5% gypse, on obtient les résultats suivants sur des éprouvettes de mortier normalisé.

| | | REFERENCE | CIMENT CONTENANT DES POUSSIERES DE PURGE |
|---|---|---|---|
| Résistance à (MPa) | 2 j | 27 | 31 |
| | 7 j | 44 | 47 |

Les avantages principaux obtenus par l'invention, en plus de ceux déjà mentionnés, sont, un coût d'installation réduit, la possibilité d'utiliser des filtres performants avec une poussière hygroscopique, la valorisation des poussières contenant du chlore, notamment par mélange avec les poussières du clinker et de préférence aussi par mélange le clinker lui-même, la facilité de nettoyage des circuits, et la possibilité d'arrêter la purge sans inconvénient pour les filtres.

Dans ce qui précède, on n'a pas mentionné certains dispositifs communs à la plupart des installations de production de ciment comme par exemple les broyeurs et mélangeurs des matières premières, l'ajout d'additifs, la "purge" d'alcalins, les broyeurs de clinker, les silos de stockage, etc...

Les systèmes de séparation des poussières d'avec le gaz d'entraînement sont bien connus et comprennent notamment les cyclones, les électrofiltres, les filtres à manche (sac) ou à gravier.

## Revendications

1. Procédé de production de clinker de ciment, dans lequel on fait passer une charge particulaire de matières premières pour ciment successivement à travers au moins une zone de préchauffage, au moins une zone de clinkérisation où la charge se transforme en clinker et au moins une zone de refroidissement dudit clinker, on brûle un combustible avec un gaz contenant de l'oxygène libre dans la zone de clinkérisation, la dite charge particulaire et/ou ledit combustible contenant du chlore, on fait circuler les fumées chaudes résultant de la combustion à contre-courant de la charge particulaire d'abord dans la zone de clinkérisation puis dans la zone de préchauffage, on envoie de l'air froid dans la zone de refroidissement au contact du clinker à refroidir, on envoie au moins une partie de l'air chaud provenant dudit contact dans une zone de dépoussiérage pour récupérer la poussière de clinker entraînée et on décharge l'air dépoussiéré résultant, on soutire une portion des fumées de la zone de clinkérisation avec les impuretés qu'elles contiennent pour constituer un courant de purge, on soumet ladite portion de fumées chaudes (purge) a un refroidissement et à un dépoussiérage et on décharge les fumées dépoussiérées, **caractérisé en ce qu'**on effectue ledit refroidissement dudit courant de purge par son mélange avec de l'air froid, **en ce qu'**on mélange de la poussière de clinker à au moins une partie dudit courant de purge après ledit refroidissement et avant ledit dépoussiérage, et **en ce que** la teneur en poussière de clinker du courant resultant du mélange du courant de purge et des poussières de clinker est de 60% à 99,5% en poids de la teneur totale en poussière dudit mélange resultant, le complément étant de la poussière du courant de purge.

2. Procédé selon la revendication 1, dans lequel ladite teneur en poussière de clinker est de 80% à 95% en poids.

3. Procédé selon la revendication 1 ou 2, dans lequel au moins une portion des particules de poussières, collectées lors du dépoussiérage de courant de purge additionné de poussière de clinker, est mélangée ensuite au clinker, avant ou après broyage de celui-ci.

4. Procédé selon l'une quelconque des revendications 1 à 3, dans lequel le procédé comporte en outre une zone de précalcination entre la zone de préchauffage et la zone de clinkérisation et en ce que le soutirage de la portion de fumées chaudes constituant la purge est effectué entre la zone de précalcination et la zone de clinkérisation.

5. Procédé selon l'une quelconque des revendications 1 à 4, dans lequel la portion de fumées chaudes contenant des poussières, constituant la purge, est soumise intermédiairement à une séparation sélective des poussières pour recueillir d'une part des particules relativement grosses, d'autre part un courant de gaz renfermant des particules relativement petites et on n'envoie à la zone de dépoussiérage, après addition de poussière de clinker, que le courant renfermant les particules relativement petites.

6. Procédé selon la revendication 5, dans lequel les particules relativement grosses sont renvoyées à la zone de clinkérisation.

7. Procédé selon la revendication 5, dans lequel les particules relativement grosses sont renvoyées à la zone de précalcination.

8. Procédé selon la revendication 5, dans lequel les particules relativement grosses sont renvoyées à la zone de préchauffage.

9. Procédé selon l'une quelconque des revendications 5 à 8, dans lequel les particules relativement petites du courant de purge, envoyées à la zone de dépoussiérage commune, représentent 20% à 80% en poids de la totalité des particules solides du courant de purge, le complément étant constitué par les particules relativement grosses qui sont envoyées à la zone de préchauffage, de précalcination ou de clinkérisation.

10. Procédé selon l'une des revendications 1 à 9, dans lequel ledit refroidissement du courant de purge précédant le mélange avec la poussière de clinker est tel que la température dudit courant de purge est amenée au-dessous de 450°C.

## Patentansprüche

1. Verfahren zur Erzeugung von Zementklinker, bei welchem ein Partikelaufgabegemenge von Rohstoffen für Zement aufeinanderfolgend durch wenigstens einen Vorwärmungsbereich, wenigstens einen Klinkerbildungsbereich, wo das Aufgabegemenge sich in Klinker umwandelt, und wenigstens einen Bereich zur Kühlung des besagten Klinkers hindurchgeführt wird, ein Brennstoff mit einem freien Sauerstoff enthaltenden Gas in dem Klinkerbildungsbereich verbrannt wird, wobei das besagte Partikelaufgabegemenge und/oder der besagte Brennstoff Chlor enthält, die sich aus der Verbrennung im Gegenstrom des Partikelaufgabegemenges ergebenden heißen Rauchgase zuerst in den Klinkerbildungsbereich und dann in den Vorwärmungsbereich umlaufen, Kaltluft in den Kühlungsbereich in Kontakt mit dem zu kühlenden Klinker zugeführt wird, wenigstens ein Teil der von dem besagten Kontakt kommenden Heißluft in einen Entstaubungsbereich geführt wird, um den mitgerissenen Klinkerstaub rückzugewinnen, und die entstehende entstaubte Luft abgeführt wird, ein Teil der Rauchgase aus dem Klinkerbildungsbereich zusammen mit den Verunreinigungen, die sie enthalten, abgezogen wird, um einen Ablaßstrom zu bilden, der besagte (Ablaß)-Teil der heißen Rauchgase einer Abkühlung und einer Entstaubung unterworfen wird und die entstaubten Rauchgase abgeführt werden, **dadurch gekennzeichnet, dass** die besagte Kühlung des Ablaßstromes durch Vermischen desselben mit Kaltluft erfolgt, dass Klinkerstaub mit wenigstens einem Teil des besagten Ablaßstromes nach der Kühlung und vor der Entstaubung vermischt wird und dass der Klinkerstaubgehalt des Stromes, der sich aus der Vermischung des Ablaßstromes und des Klinkerstaubs ergibt, 60 bis 99,5 Gew.-% des gesamten Staubgehaltes des sich ergebenden Gemisches beträgt, wobei die Zusatzmenge Staub des Ablaßstromes ist,

2. Verfahren nach Anspruch 1, bei welchem der besagte Klinkerstaubgehalt 80 bis 95 Gew.-% beträgt.

3. Verfahren nach Anspruch 1 oder 2, bei welchem zumindest ein Teil der während der Entstaubung des mit Klinkerstaub versetzten Ablaßstromes gesammelten Staubteilchen dann mit dem Klinker vor oder nach der Zerkleinerung desselben vermischt wird.

4. Verfahren nach einem der Ansprüche 1 bis 3, bei welchem das Verfahren ferner einen Vorkalzinierungsbereich zwischen dem Vorwärmungsbereich und dem Klinkerbildungsbereich aufweist und dass das Abziehen des den Ablaß bildenden Teils von heißen Rauchgasen zwischen dem Vorkalzinierungsbereich und dem Klinkerbildungsbereich durchgeführt wird.

5. Verfahren nach einem der Ansprüche 1 bis 4, bei welchem der den Ablaß bildende, Staub enthaltende Teil von heißen Rauchgasen inzwischen einer selektiven Trennung des Staubs unterworfen wird, um einerseits verhältnismäßig große Teilchen und andererseits einen verhältnismäßig kleine Teilchen enthaltenden Gasstrom rückzugewinnen und nur der die verhältnismäßig kleinen Teilchen enthaltende Strom in den Entstaubungsbereich nach Zusatz von Klinkerstaub geführt wird.

6. Verfahren nach Anspruch 5, bei welchem die verhältnismäßig großen Teilchen in den Klinkerbildungsbereich zurückgeführt werden.

7. Verfahren nach Anspruch 5, bei welchem die verhältnismäßig großen Teilchen in den Vorkalzinierungsbereich zurückgeführt werden.

8. Verfahren nach Anspruch 5, bei welchem die verhältnismäßig großen Teilchen in den Vorwärmungsbereich zurückgeführt werden.

9. Verfahren nach einem der Ansprüche 5 bis 8, bei welchem die dem gemeinsamen Entstaubungsbereich zugeführten verhältnismäßig kleinen Teilchen des Ablaßstromes 20 bis 80 Gew.-% der Gesamtheit der Festteilchen des Ablaßstromes darstellen, wobei die Zusatzmenge durch verhältnismäßig große Teilchen gebildet wird, die dem Vorwärmungs-, Vorkalzinierungs- oder Klinkerbildungsbereich zugeführt werden.

10. Verfahren nach einem der Ansprüche 1 bis 9, bei welchem die der Vermischung mit dem Klinkerstaub vorangehende Kühlung des Ablaßstromes derart ist, dass die Temperatur des besagten Ablaßstromes unter 450°C herabgesetzt wird.

## Claims

1. Process for the production of cement clinker, in which a particulate charge of cement raw materials is passed successively through at least one preheating zone, at least one clinkerization zone, where the charge is converted into clinker, and at least one zone for cooling the said clinker, a fuel is incinerated with a gas containing free oxygen in the clinkerization zone, the said particulate charge and/or the said fuel containing chlorine, the hot fumes resulting from the combustion are made to move countercurrentwise with respect to the particulate charge, first in the clinkerization zone and then in the preheating zone, cold air is conveyed into the cooling zone in contact with the clinker to be cooled, at least a portion of the hot air originating from the said contact is conveyed into a dedusting zone in order to recover the entrained clinker dust and the resulting dedusted air is discharged, a portion of the fumes from the clinkerization zone, with the impurities which they contain, is withdrawn in order to constitute a purge stream, the said portion of the hot fumes (purge) is cooled and dedusted and the dedusted fumes are discharged, **characterized in that** the said cooling of the said purge stream is carried out by mixing it with cold air, **in that** clinker dust is mixed with at least a portion of the said purge stream after the said cooling and before the said dedusting, and **in that** the content of clinker dust in the stream resulting from the mixing of the purge stream and of the clinker dust is from 60 to 99.5% by weight of all the dust content of the said resulting stream, the remainder being dust from the purge stream.

2. Process according to Claim 1, in which the said content of clinker dust is from 80 to 95% by weight.

3. Process according to Claim 1 or 2, in which at least a portion of the dust particles collected during the dedusting of the purge stream to which clinker dust has been added is subsequently mixed with the clinker, before or after grinding the latter.

4. Process according to any one of Claims 1 to 3, in which the process additionally contains a precalcination zone between the preheating zone and the clinkerization zone and in that the portion of hot fumes which constitutes the purge is drawn off between the precalcination zone and the clinkerization zone.

5. Process according to any one of Claims 1 to 4, in which the portion of hot fumes containing dust which constitutes the purge is intermediately subjected to selective separation of the dust in order to collect, on the one hand, relatively coarse particles and, on the other hand, a gas stream containing relatively small particles and only the stream containing the relatively small particles is conveyed to the dedusting zone, after addition of clinker dust.

6. Process according to Claim 5, in which the relatively coarse particles are returned to the clinkerization zone.

7. Process according to Claim 5, in which the relatively coarse particles are returned to the precalcination zone.

8. Process according to Claim 5, in which the relatively coarse particles are returned to the preheating zone.

9. Process according to any one of Claims 5 to 8, in which the relatively small particles of the purge stream, conveyed to the common dedusting zone, represent 20 to 80% by weight of all the solid particles of the purge stream, the remainder being composed of the relatively coarse particles which are conveyed to the preheating, precalcination or clinkerization zone.

10. Process according to one of Claims 1 to 9, in which the said cooling of the purge stream, which precedes the mixing with the clinker dust, is such that the temperature of the said purge stream is brought below 450EC.
